# EUROPÄISCHE PATENTSCHRIFT

(11) **EP 2 635 807 B1**
(45) Veröffentlichungstag und Bekanntmachung des Hinweises auf die Patenterteilung: **13.05.2015**
(21) Anmeldenummer: 11776207.0
(22) Anmeldetag: 31.10.2011
(51) Int. Cl.: F03D 11/00

(54) **ROTORBLATT MIT HEIZVORRICHTUNG FÜR EINE WINDENERGIEANLAGE**
ROTORBLADE WITH HEATING SYSTEM FOR A WIND TURBINE
PALE DE ROTOR AVEC SYSTÈME DE CHAUFFAGE POUR UNE ÉOLIENNE

(30) Priorität: 04.11.2010 DE 102010043434
(43) Veröffentlichungstag der Anmeldung: 11.09.2013
(73) Patentinhaber: Wobben Properties GmbH, 26605 Aurich (DE)
(72) Erfinder: LENSCHOW, Gerhard, 26603 Aurich (DE)
(74) Vertreter: Eisenführ Speiser
(86) Internationale Anmeldenummer: PCT/EP2011/069120
(87) Internationale Veröffentlichungsnummer: WO 2012/059466

(56) Entgegenhaltungen:
- WO-A1-03/058063
- WO-A2-03/023943
- DE-A1-102004 042 423
- DE-A1-102006 032 387
- DE-C1- 19 748 716

## Beschreibung

Die Erfindung betrifft ein Windenergieanlagen-Rotorblatt.

Da Windenergieanlagen an vielen verschiedenen Standorten aufgestellt werden, kann es dazu kommen, dass die Umgebungsbedingungen und insbesondere die Umgebungstemperatur so niedrig ist, dass es zu einer Eisbildung an der Windenergieanlage und insbesondere an den Rotorblättern kommt. Diese Eisbildung ist nachteilig, weil es durch _ Ablösen von Eis zu einer Gefährdung von Personen in der Umgebung der Windenergieanlage kommen kann. Ferner kann eine Vereisung der Rotorblätter zu einer Unwucht in dem Rotor der Windenergieanlage sowie einer Ertragsredüktion führen.

Es ist somit eine Aufgabe der vorliegenden Erfindung, ein Windenergieanlagen-Rotorblatt bzw. eine Windenergieanlage vorzusehen, welche eine Enteisung des Rotorblattes ermöglicht.

Diese Aufgabe wird durch ein Windenergieanlagen-Rotorblatt gemäß Anspruch 1 gelöst.

Somit wird ein Windenergieanlagen-Rotorblatt mit mindestens einer elektrisch beheizbaren Heizmatte vorgesehen, welche im Inneren des Rotorblattes befestigt ist, wie aus WO 03/058063 hervorgeht.

Gemäß einem Aspekt der vorliegenden Erfindung stellen die beheizbaren Heizmatten Silikonmatten mit einem Heizelement dar. Die Silikonmatten werden mit Silikon im Inneren oder in einem Hohlraum des Rotorblattes befestigt.

Gemäß einem weiteren Aspekt der vorliegenden Erfindung werden die Heizmatten als Silikongel-Heizmatten ausgestaltet und weisen ein elektrisches Heizelement auf.

Gemäß einem weiteren Aspekt der vorliegenden Erfindung ist eine Windenergieanlage mit einem oben beschriebenen Rotorblatt vorgesehen.

Die Erfindung betrifft den Gedanken, ein Windenergieanlagen-Rotorblatt mit mindestens einer Heizmatte (im Inneren des Rotorblattes bzw. an der Innenkontur des Rotorblattes befestigt) vorzusehen, welche eine elektrische Erhitzung bzw. Erwärmung des Rotorblattes der Windenergieanlage ermöglichen kann, um einen Eisansatz zu vermeiden.

Die Heizmatten können insbesondere bei Rotorblättern verwendet werden, die aus mehreren Teilen bestehen. Ferner ist eine Montage von Heizmatten insbesondere bei Rotorblättern mit einem Stahlsegment nicht ohne Weiteres möglich.

Gemäß der Erfindung werden die Heizmatten im Innenbereich der Rotorblätter befestigt. Die Befestigung der Heizmatten kann beispielsweise durch ein Klebeverfahren erfolgen. Der Kleber zum Kleben der Heizmatten kann beispielsweise in einem Spritzverfahren aufgebracht werden, wodurch die Oberflächengüte der Klebeschicht verbessert werden kann. Alternativ kann der Kleber durch Rollen aufgetragen werden

Alternativ dazu können die Heizmatten durch ein adhäsives Dichtungsband oder eine adhäsive Folie im Inneren des Rotorblattes befestigt werden.

Das Vorsehen von Heizmatten im Inneren des Rotorblattes ist vorteilhaft, weil dies leicht realisierbar ist, diese Lösung ist leicht skalierbar, die Massen sind gering, die Heizmatten weisen eine hohe Lebensdauer auf, das Anbringen der Heizmatten ist serientauglich, weist geringe Kosten auf, ist servicefreundlich, ist robust und ist einsetzbar sowohl bei Stahl-Rotorblättern, bei GFK-Rotorblättern als auch bei CFK-Rotorblättern.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt einen Querschnitt eines Windenergleanlagen-Rotorblattes gemäß einem ersten Ausführungsbeispiel,
- Fig. 2: zeigt einen weiteren Querschnitt eines Rotorblatts eines Windenergieanlagen-Rotorblattes gemäß einem ersten Ausführungsbeispiel, und
- Fig. 3: zeigt eine schematische Darstellung einer Windenergieanlage gemäß einem zweiten Ausführungsbeispiel.

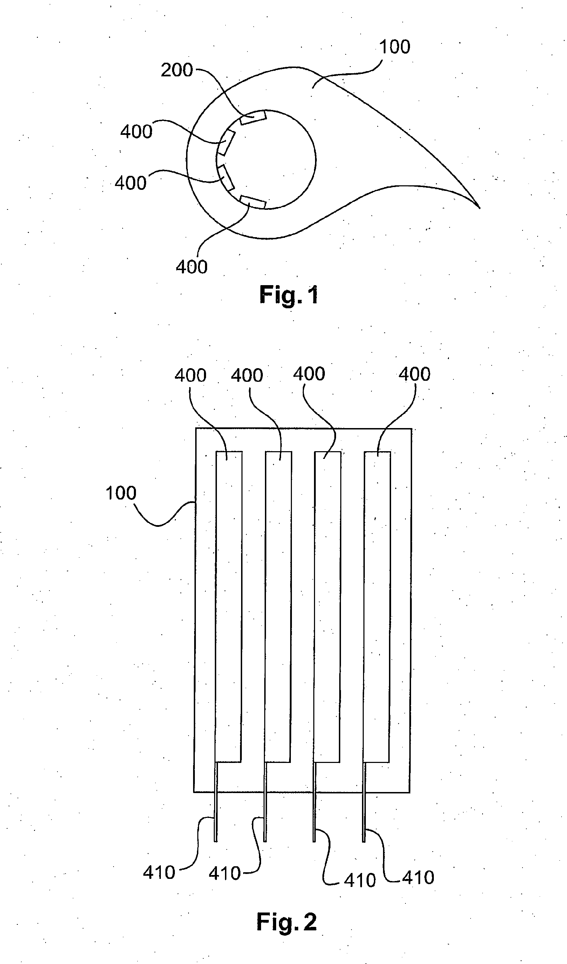

Fig. 1 zeigt einen Querschnitt eines Windenergieanlagen-Rotorblattes gemäß einem ersteh Ausführungsbeispiel der Erfindung. Das Rotorblatt 100 weist im Inneren eine Öffnung oder einen Hohlraum (bzw. Innenkontur) 200 auf, welche sich entlang der Längsrichtung des Rotorblattes erstreckt. Am Umfang der Öffnung 200 wird mindestens eine, vorzugsweise mehrere elektrische Heizmatten 400 vorgesehen. Die Kopplung zwischen der Innenwand der Öffnung 200 und den Heizmatten 400 weist vorzugsweise eine gute thermische Leitfähigkeit auf. Optional kann die Verbindung elektrisch isolierende Eigenschaften aufweisen.

Fig. 2 zeigt einen weiteren Querschnitt durch ein Rotorblatt 100 gemäß der Erfindung. Innerhalb des Rotorblattes bzw. innerhalb der Öffnung 200 können eine Mehrzahl von elektrisch betreibbaren Heizmatten 400 vorgesehen werden. Die Heizmatten 400 weisen mindestens einen elektrischen Anschluss 410 auf, über welchen die benötigte elektrische Leistung zugeführt werden kann. Durch Zuführen einer elektrischen Leistung werden die Heizmatten 400 beispielsweise elektrisch erhitzt und können ihre Wärme an das Rotorblatt abgeben, so dass das Rotorblatt ebenfalls erwärmt wird. Innerhalb der Heizmatte 400 können elektrische Heizdrähte vorgesehen sein, die elektrisch mit den Anschlüssen 410 verbunden sind.

Die Heizmatten gemäß der Erfindung können als Silikonheizmatten ausgestaltet sein. Diese Silikonheizmatten können durch Aufspritzen bzw. Anspritzen von Silikon an der Innenseite des Rotorblattes befestigt werden. Hierbei ist darauf zu achten, dass keine Lufteinschlüsse beim Verkleben entstehen. Diese Lufteinlässe hätten die Wirkung, dass es an diesen Stellen zu einer ungewollten erhöhten Erwärmung der Heizmatten kommen kann, da die Wärme an diesen Stellen nicht an das Rotorblatt abgeführt werden kann. Das Verkleben der Heizmatten mit Silikon ist jedoch nachteilig, da die Matten fest verklebt sind und die Matten somit nicht ohne Weiteres austauschbar sind.

Gemäß einem weiteren Aspekt der vorliegenden Erfindung können die Heizmatten durch ein Silikongel aufgeklebt werden bzw. die Heizmatten können schon als Silikongel-Klebematten ausgestaltet sein. Das Verwenden von Gelklebematten als Heizmatten ist vorteilhaft, da die Matte zerstörungsfrei ausgetauscht werden kann. Gelklebematten sind ferner ebenfalls in der Produktion vorteilhaft, da hierbei keine unerwünschten Aerosole entstehen können. Die Verwendung von Gelklebematten ist ferner vorteilhaft, weil damit Luftblasen beim Verkleben vermieden und die Kleberschichtdicken schnell und zuverlässig eingehalten werden können.

Die Heizmatten können beispielsweise elektrisch leitfähige Fäden aufweisen, welche erwärmt werden, wenn den Heizmatten elektrische Energie zugeführt wird.

Gemäß der Erfindung können die Heizmatten sowohl im rotorblattwurzelnahen Bereich als auch im Bereich der Rotorblattspitze oder im mittleren Bereich des Rotorblattes verwendet werden, um das Rotorblatt zu erwärmen und eine Vereisung zu vermeiden.

Gemäß einem Aspekt der vorliegenden Erfindung können die Heizmatten als Silikonmatten mit einem sich darin befindlichen Gewebe ausgestaltet sein. Zusätzlich dazu ist ein Heizfaden vorgesehen. Der Heizfaden kann auch als das Gewebe ausgestaltet sein.

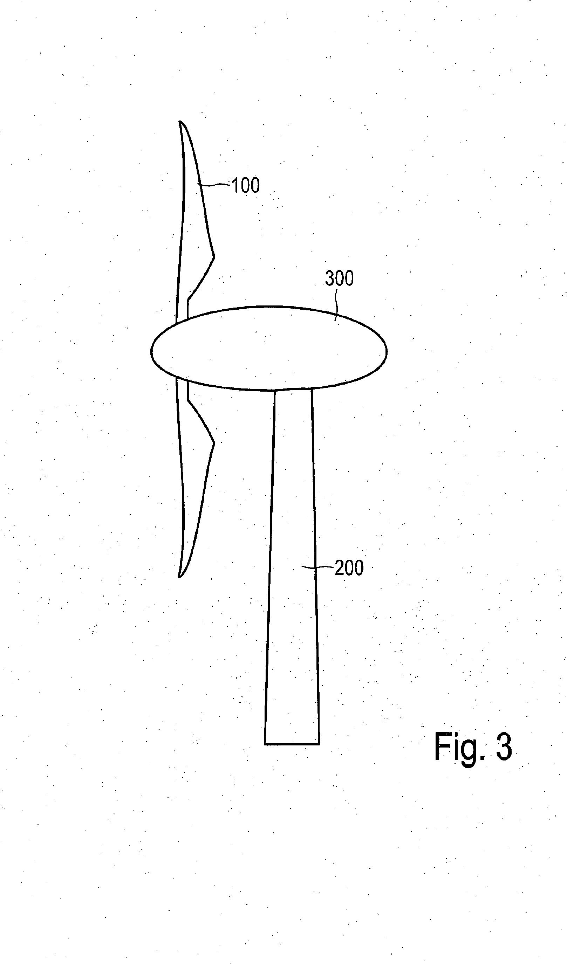

Fig. 3 zeigt eine schematische Darstellung einer Windenergieanlage gemäß einem zweiten Ausführungsbeispiel. Die Windenergieanlage weist einen Turm 200, auf dem Turm eine Gondel 300 sowie eine Mehrzahl von Rotorblättern 100 auf. Vorzugsweise weist die Windenergieanlage drei Rotorblätter 100 auf. Die Rotorblätter gemäß dem zweiten Ausführungsbeispiel können auf den Rotorblättern gemäß dem ersten Ausführungsbeispiel basieren.

## Patentansprüche

1. Windenergieanlagen-Rotorblatt, mit
mindestens einer elektrisch betreibbaren Heizmatte (400), welche im Inneren des Rotorblattes befestigt ist, wobei
die Heizmatten (400) Silikonmatten mit einem Heizelement (401) darstellen und wobei die Silikonmatten (400) mit Silikon im Inneren (200) des Rotorblattes (100) befestigt sind.

2. Windenergieanlagen-Rotorblatt, mit
mindestens einer elektrisch betreibbaren Heizmatte (400), welche im Inneren des Rotorblattes befestigt ist,
wobei die Heizmatten (400) Silikongel-Heizmatten aufweisen oder die Heizmatten als Silikongel-Heizmatten ausgestaltet sind und ein Heizelement (401) aufweisen.

3. Windenergieanlagen-Rotorblatt nach einem der Ansprüche 1 oder 2, wobei das Rotorblatt (100) im Inneren eine Öffnung (200) aufweist, welcher sich entlang der Längsrichtung des Rotorblattes (100) erstreckt,
wobei am Umfang der Öffnung (200) mindestens eine elektrisch betreibbare Heizmatte (400) vorgesehen ist.

4. Windenergieanlage mit einem Rotorblatt nach einem der Ansprüche 1 bis 3.

## Claims

1. Wind turbine rotor blade, having
at least one heating mat (400) which can be operated electrically and which is secured at the inner side of the rotor blade, wherein the heating mats (400) constitute silicone mats having a heating element (401) and the silicone mats (400) are secured with silicone at the inner side (200) of the rotor blade (100).

2. Wind turbine rotor blade, having
at least one heating mat (400) which can be operated electrically and which is secured at the inner side of the rotor blade,
wherein the heating mats (400) have silicone gel heating mats or the heating mats are constructed as silicone gel heating mats and have a heating element (401).

3. Wind turbine rotor blade according to either claim 1 or claim 2, wherein the rotor blade (100) has at the inner side an opening (200) which extends in the longitudinal direction of the rotor blade (100),
wherein there is provided at the periphery of the opening (200) at least one electrically operable heating mat (400).

4. Wind turbine having a rotor blade according to any one of claims 1 to 3.

## Revendications

1. Pale de rotor d'éolienne, comprenant .
au moins un tapis chauffant (400) pouvant fonctionner de manière électrique, lequel est fixé à l'intérieur de la pale de rotor, dans laquelle
les tapis chauffants (400) représentent des tapis de silicone comportant un élément chauffant (401) et
dans laquelle les tapis de silicone (400) sont fixés, par du silicone, à l'intérieur (200) de la pale de rotor (100) .

2. Pale de rotor d'éolienne, comprenant
au moins un tapis chauffant (400) pouvant fonctionner de manière électrique, lequel est fixé à l'intérieur de la pale de rotor,
sachant que les tapis chauffants (400) présentent des tapis chauffants en gel de silicone ou que les tapis chauffants sont configurés sous la forme de tapis chauffants en gel de silicone et présentent un élément chauffant (401).

3. Pale de rotor d'éolienne selon l'une quelconque des revendications 1 ou 2, sachant que la pale de rotor (100) présente, à l'intérieur, une ouverture (200), laquelle s'étend dans le sens longitudinal de la pale de rotor (100),
sachant qu'au moins un tapis chauffant (400) pouvant fonctionner de manière électrique est prévu au niveau de la périphérie de l'ouverture (200).

4. Eolienne comprenant une pale de rotor selon l'une quelconque des revendications 1 à 3.
